# EUROPEAN PATENT APPLICATION

(11) **EP 2 835 799 A1**
(43) Date of publication of application: **11.02.2015**
(21) Application number: 13306138.2
(22) Date of filing: 08.08.2013
(51) Int. Cl.: G10L 19/018

(54) **Method and apparatus for detecting a watermark symbol in a section of a received version of a watermarked audio signal**

(71) Applicant: Thomson Licensing, 92130 Issy-les-Moulineaux (FR)
(72) Inventor: Chen, Xiao-Ming, 30165 Hannover (DE); Baum, Peter Georg, 30539 Hannover (DE); Arnold, Michael, 30916 Isernhagen (DE); Gries, Ulrich, 30419 Hannover (DE)
(74) Representative: Hartnack, Wolfgang

(57) **Abstract**

In watermark symbol detection for watermarked audio signals a correlation and statistical detection is used, which is computationally complex. Therefore a downsampling can be used prior to the correlation. However, if the watermarked audio signals are transmitted over an acoustic path, without downsampling the detection rate is considerably higher than the detection rate when including downsampling of the correlation input signals. There is a trade-off between calculation complexity and detection robustness. According to the invention, an interpolation of the correlation result values is carried out for input to the statistical detector, in order to approximate the detection robustness of correlation without downsampling.

## Description

### Technical field

The invention relates to a method and to an apparatus for detecting a watermark symbol in a section of a received version of a watermarked audio signal, wherein the received version of the watermarked audio signal can include noise and/or echoes.

### Background

Audio watermarking modifies an audio signal or track by embedding hidden information. If watermark embedding happens in the frequency domain, the frequency range for embedding is typically limited e.g. from 300Hz to 10kHz in view of perceptual transparency and for robustness against audio compression employing low-pass filtering. For audio signals sampled at 48kHz or 44.1kHz, downsampling by a factor of two decreases complexity without reducing robustness against common signal processing steps.

In EP 2175444 A1 and in WO 2011/141292 A1 statistical detectors are disclosed which improve the robustness of audio watermarking over an acoustic path, e.g. loudspeaker -> microphone, enabling successful deployment of audio watermarking systems for e.g. second-screen applications. These statistical detectors use correlation peak amount values between a watermarked signal and a reference signal, and calculate corresponding false positive probabilities for watermark symbol detection.

For efficient implementation, the EP 2175444 A1 statistical detector uses circular correlation instead of normal correlation. The efficiency of the circular correlation is based on the Fast Fourier Transform (FFT) and the Inverse Fast Fourier Transform (IFFT). The FFTs are carried out for received watermarked signals and for the reference signals. After multiplication of one spectrum with the conjugate complex of the other spectrum, IFFT is performed to get the circular correlation of these two signals. Carrying out such correlation is computationally demanding.

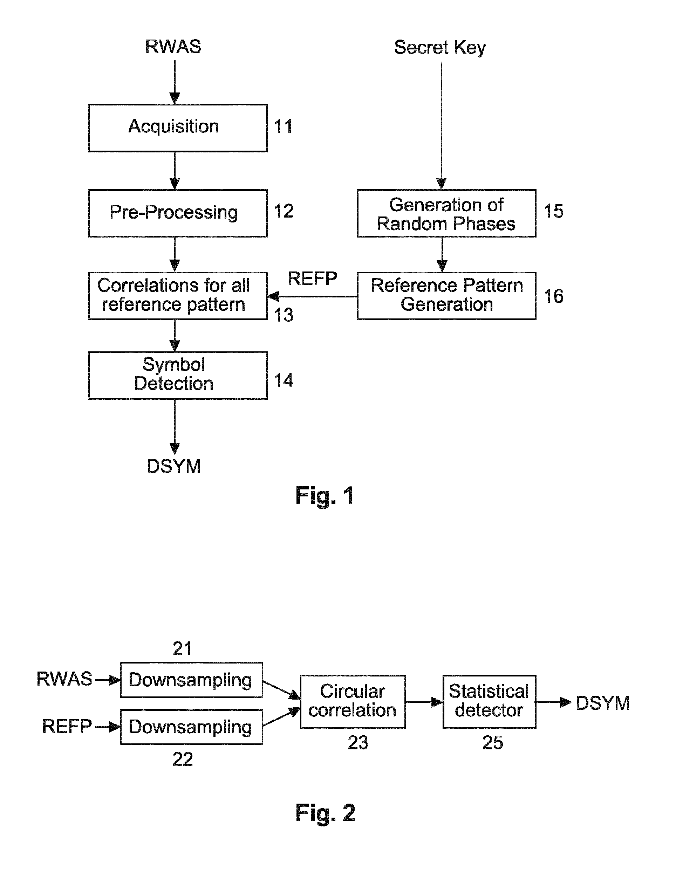

In the watermark decoder processing in Fig. 1, a received watermarked signal RWAS is re-sampled in an acquisition or receiving section step or stage 11, and thereafter may pass through a pre-processing step or stage 12 wherein a spectral shaping and/or whitening is carried out. In the following correlation step or stage 13 it is correlated section by section with one or more reference patterns REFP. A symbol detection or decision step or stage 14 determines, whether or not a corresponding watermark symbol DSYM is present.

At watermark encoder side, a secret key was used to generate pseudo-random phases, from which related reference pattern bit sequences (also called symbols) were generated and used for watermarking the audio signal. At watermark decoder side, these pseudo-random phases are generated in the same way in a corresponding step or stage 15, based on the same secret key. From the pseudo-random phases, related candidate reference patterns or symbols REFP are generated in a reference pattern generation step or stage 16 and are used in step/stage 13 for checking whether or not a related watermark symbol is present in the signal section of the received audio signal.

A known statistical detector in conjunction with downsampling is illustrated in a simplified manner in Fig. 2. With a down-sampling by factor '2' in time domain, FFTs and IFFTs of half-length can be employed in the circular correlation resulting in a lower complexity. Such complexity reduction is even more evident if long-length FFTs and IFFTs are employed. For second-screen applications using audio watermark detectors, it is important to reduce the power-consumption of hand-held devices.

In Fig. 2, the received watermarked signal RWAS and the reference patterns REFP pass through a 2:1 downsampling step or stage 21 and 22, respectively. The downsampling is followed by a circular correlation step or stage 23 including FFT at the input and IFFT before result output, and a statistical watermark detector 25. In step/stage 23, one spectrum is multiplied with the conjugate complex of the other spectrum, and IFFT processing is performed to get the circular correlation result of the two signals RWAS and REFP.

### Summary of invention

However, for watermarked audio signals or tracks transmitted over an acoustic path it was found that, without downsampling, the detection rate is considerably higher than the detection rate when including downsampling of the input signals. I.e., there is a trade-off between calculation complexity and detection robustness.

A problem to be solved by the invention is to achieve similar detection robustness like a statistical detector without using downsampling prior to correlation while achieving reduced calculation complexity of a statistical detector using downsampling. This problem is solved by the method disclosed in claim 1. An apparatus that utilises this method is disclosed in claim 2.

According to the invention, in order to approximate the detection robustness of circular correlation without downsampling before input, a temporal interpolation step is inserted between the circular correlation and the statistical detector. Unfortunately, due to the downsampling, the number of correlation result peaks is reduced, but that temporal interpolation increases the number of correlation result peaks and thereby an improved watermark detection reliability is achieved. If the interpolation is implemented e.g. as a short length FIR filter, the calculation complexity of the modified detector is still much lower than that of the detector without using input values downsampling.

The invention provides a better detection robustness/computational effort trade-off than a state-of-the-art detector without or with downsampling.

In principle, the inventive method is suited for detecting a watermark symbol in a section of a received version of a watermarked audio signal, wherein said received version of said watermarked audio signal can include noise and/or echoes and wherein watermark symbols were embedded in said audio signal by modifying sections of said audio signal in relation to at least two different reference data sequences, said method including the steps:
- temporally downsampling said received watermarked audio signal and temporally downsampling in a corresponding manner said candidate reference data sequences;
- correlating in each case the downsampled version of said section of said received watermarked audio signal and the downsampled version of said candidates of said reference data sequences, wherein said correlating is a circular correlation, so as to get a corresponding set of correlation result values;
- temporally interpolating said set of correlation result values;
- based on peak amount values in the set of temporally interpolated correlation result values for said audio signal section, detecting in a statistical detector which one of corresponding candidate watermark symbols is present in said received audio signal section, so as to output a corresponding detected watermark symbol for the received audio signal section.

In principle the inventive apparatus is suited for detecting a watermark symbol in a section of a received version of a watermarked audio signal, wherein said received version of said watermarked audio signal can include noise and/or echoes and wherein watermark symbols were embedded in said audio signal by modifying sections of said audio signal in relation to at least two different reference data sequences, said apparatus including:
- means being adapted for temporally downsampling said received watermarked audio signal and for temporally downsampling in a corresponding manner said candidate reference data sequences;
- means being adapted for correlating in each case the downsampled version of said section of said received watermarked audio signal and the downsampled version of said candidates of said reference data sequences, wherein said correlating is a circular correlation, so as to get a corresponding set of correlation result values;
- means being adapted for temporally interpolating said set of correlation result values;
- means being adapted for detecting for said audio signal section in a statistical detector, based on peak amount values in the set of temporally interpolated correlation result values, which one of corresponding candidate watermark symbols is present in said received audio signal section, so as to output a corresponding detected watermark symbol for the received audio signal section.

Advantageous additional embodiments of the invention are disclosed in the respective dependent claims.

### Brief description of drawings

Exemplary embodiments of the invention are described with reference to the accompanying drawings, which show in:
- Fig. 1: Block diagram of a known watermark detector;
- Fig. 2: Known statistical watermark detector processing using downsampling and circular correlation;
- Fig. 3: Comparison of correlation values with/without downsampling;
- Fig. 4: Statistical watermark detector processing according to the invention.

### Description of embodiments

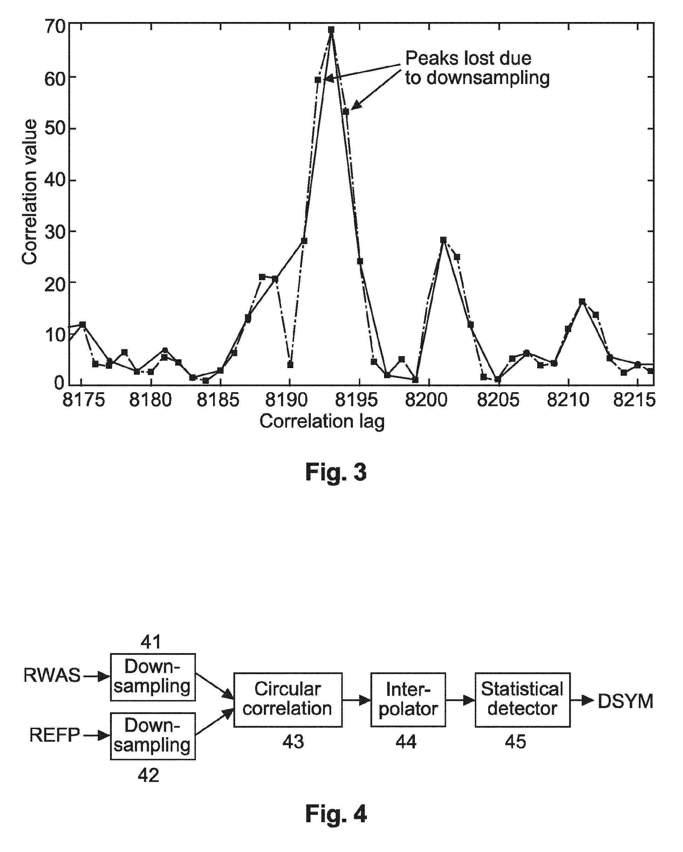

Fig. 3 depicts a snapshot of a small section of circular correlation values entering the statistical detector, with or without downsampling, where the watermarked audio signal has been transmitted over an acoustic path. The dashed curve depicts the correlation result values without downsampling prior to the correlation whereas the solid curve depicts the correlation result values following downsampling . FFTs/ IFFTs of length 16384 were used in the circular correlation of the detector without downsampling, while 8192-length FFTs/IFFTs were used in the circular correlation of the detector with downsampling. For a convenient comparison between 8192-length and 16384-length circular correlation, the running indices for the 8192-length circular correlation values are multiplied by '2', so that in Fig. 3 two 16k correlation result values presented in comparison with one 8k correlation result value. It can be seen from Fig. 3 that some correlation result value peak amount values got lost due to the downsampling, as pointed out by the two arrows in Fig. 3. However, the evaluation of correlation result value peak amount values is essential for a statistical detector in order to improve the detection performance, as described in detail in EP 2175444 A1. I.e. on average, downsampling decreases the detection robustness in the presence of an acoustic path which introduces distortions, echoes and/or reverberation.

As mentioned above, the frequency range for embedding can be limited. In turn, only this frequency range is relevant for watermark detection. Consequently, during the multiplication step in the circular correlation calculation, multiplication is only necessary for the relevant frequency range, and thereby the output signal after circular correlation is also limited to the relevant frequency range.

Circular correlation values which are not available due to the temporal downsampling can at least partly be reconstructed by means of temporal interpolation, if the downsampling does not introduce alias in the relevant frequency range. For example, if the received signals RWAS and the reference signals REFP are sampled at 48kHz and the relevant frequency range is limited to 10kHz, a downsampling factor of '2' will not cause any spectral alias in the output signal following circular correlation.

The passband of the frequency response of a corresponding temporal interpolator covers the frequency range used for embedding the watermark symbols, and a type of interpolation is used which recovers additional peak values temporally between the correlation result values.

Such type of temporal interpolation is described in F.M. Gardner, "Interpolation in Digital Modems - Part I: Fundamentals", IEEE Trans. of Commun., vol.41, no.3, March 1993, pp.501-507, and in L. Erup, F.M. Gardner, R.A. Harris, "Interpolation in Digital Modems - Part II: Implementation and Performance", IEEE Trans. of Commun., vol.41, no.6, June 1993, pp. 998-1008.

Therefore, according to the invention and as shown in Fig. 4, an interpolation step or stage 44 is arranged between the circular correlation step or stage 43 (following downsampling steps or stages 41 and 42) and the statistical detector 45, which interpolation approximates the circular correlation of the case without downsampling. Since interpolation can be accomplished by FIR filtering of low order (e.g. a 6-tap Lagrange interpolator provides sufficiently good results), this solution provides a better trade-off between detection robustness and computational complexity for the audio watermarking detection system.

Such 6-tap Lagrange interpolator is described in J.J. Wang, "Timing Recovery Techniques for Digital Recording Systems", PhD thesis, National University of Singapore, 2002, pp.139-140.

On one hand, because only correlation result value peaks are used in the statistical detector 45, interpolation in step/ stage 44 may only be necessary for signal portions near peak amount values in the output signal of the circular correlation step/stage 43. This will further reduce the computational complexity.

On the other hand, the detection robustness can be further improved by applying a temporal interpolation successively because this increases the number of correlation result peak values but circular correlation of downsampled input signals plus e.g. two successive interpolations can still require in total less computational complexity than circular correlation of non-downsampled input signals. Although this increases the computational complexity, it offers the possibility to further adjust the detection robustness/computational complexity trade-off based on the available computational power.

Instead for watermarked audio input signals, the invention can be used in a corresponding manner for watermarked video input signals.

After a current section of the input signal is checked, the processing described is continued with the following section of the input signal.

The invention may be applied to any correlation-based watermark detection if input signal downsampling is applied.

The inventive processing can be carried out by a single processor or electronic circuit, or by several processors or electronic circuits operating in parallel and/or operating on different parts of the inventive processing.

## Claims

1. Method for detecting (14, 45) a watermark symbol in a section of a received version (11, RWAS) of a watermarked audio signal, wherein said received version of said watermarked audio signal can include noise and/or echoes and wherein watermark symbols were embedded in said audio signal by modifying sections of said audio signal in relation to at least two different reference data sequences (REFP), said method including the steps:
- temporally downsampling (41) said received watermarked audio signal (RWAS) and temporally downsampling (42) in a corresponding manner said candidate reference data sequences (REFP);
- correlating (13, 43) in each case the downsampled version of said section of said received watermarked audio signal (RWAS) and the downsampled version of said candidates of said reference data sequences (REFP), wherein said correlating (13, 43) is a circular correlation, so as to get a corresponding set of correlation result values;
said method being **characterised by** the steps:
- temporally interpolating (44) said set of correlation result values;
- based on peak amount values in the set of temporally interpolated correlation result values for said audio signal section, detecting in a statistical detector (14, 45) which one of corresponding candidate watermark symbols is present in said received audio signal section, so as to output a corresponding detected watermark symbol (DSYM) for the received audio signal section.

2. Apparatus for detecting (14, 45) a watermark symbol in a section of a received version (11, RWAS) of a watermarked audio signal, wherein said received version of said watermarked audio signal can include noise and/or echoes and wherein watermark symbols were embedded in said audio signal by modifying sections of said audio signal in relation to at least two different reference data sequences (REFP), said apparatus including:
- means (41, 42) being adapted for temporally downsampling said received watermarked audio signal (RWAS) and for temporally downsampling in a corresponding manner said candidate reference data sequences (REFP);
- means (13, 43) being adapted for correlating in each case the downsampled version of said section of said received watermarked audio signal (RWAS) and the downsampled version of said candidates of said reference data sequences (REFP), wherein said correlating is a circular correlation, so as to get a corresponding set of correlation result values;
- means (44) being adapted for temporally interpolating said set of correlation result values;
- means (14, 45) being adapted for detecting for said audio signal section in a statistical detector, based on peak amount values in the set of temporally interpolated correlation result values, which one of corresponding candidate watermark symbols is present in said received audio signal section, so as to output a corresponding detected watermark symbol (DSYM) for the received audio signal section.

3. Method according to claim 1, or apparatus according to claim 2, wherein said circular correlation (43) is performed using FFT at the input and IFFT before result output.

4. Method according to the method of claim 1 or 3, or apparatus according to the apparatus of claim 2 or 3, wherein the frequency range used for embedding watermark symbols is smaller than the total frequency range of said audio signal.

5. Method according to the method of one of claims 1, 3 and 4, or apparatus according to the apparatus of one of claims 2 to 4, wherein circular correlation result values, which were not generated due to said temporal downsampling prior to said circular correlation, are reconstructed by means of a temporal interpolating (44) that recovers additional peak values between said correlation result values, whereby the passband of the frequency response of the corresponding temporal interpolator covers the frequency range used for embedding the watermark symbols.

6. Method according to the method of claim 5, or apparatus according to the apparatus of claim 5, wherein said temporal interpolating (44) is an FIR filtering of low order.

7. Method according to the method of claim 6, or apparatus according to the apparatus of claim 6, wherein said temporal interpolating (44) is carried out using a 6-tap Lagrange interpolator.

8. Method according to the method of one of claims 1 and 3 to 7, or apparatus according to the apparatus of one of claims 2 to 7, wherein said temporal interpolating (44) is carried out only near peak amount values in the set of correlation result values.

9. Method according to the method of one of claims 1 and 3 to 8, or apparatus according to the apparatus of one of claims 2 to 8, wherein said temporal downsampling (41, 42) is a 2:1 downsampling and said temporal interpolating (44) is a 1:2 interpolating.
